(19) Europäisches Patentamt
European Patent Office
Office européen des brevets

(11) Veröffentlichungsnummer: **0 316 730**
**A2**

(12) **EUROPÄISCHE PATENTANMELDUNG**

(21) Anmeldenummer: **88118628.2**

(22) Anmeldetag: **09.11.88**

(51) Int. Cl.4: **C09B 67/24 , D06P 3/32 , D06P 1/645 , D06P 1/653**

(30) Priorität: **17.11.87 DE 3738962**

(43) Veröffentlichungstag der Anmeldung: **24.05.89 Patentblatt 89/21**

(84) Benannte Vertragsstaaten: **CH DE FR GB IT LI**

(71) Anmelder: **BAYER AG**
**Konzernverwaltung RP Patentabteilung**
**D-5090 Leverkusen 1 Bayerwerk(DE)**

(72) Erfinder: **Westphal, Jochen, Dr.**
**Am Rittersberg 43**
**D-4000 Düsseldorf(DE)**
Erfinder: **Träubel, Harro, Dr.**
**Dresdener Strasse 14**
**D-5090 Leverkusen 1(DE)**
Erfinder: **Petroll, Werner, Dipl.-Ing.**
**Buschweg 1**
**D-5067 Kuerten-Herweg(DE)**
Erfinder: **Paulat, Volker, Dr.**
**Menzelweg 1**
**D-4019 Monheim(DE)**
Erfinder: **Dietrich, Manfred, Dr.**
**Dresdener Strasse 16**
**D-5090 Leverkusen 1(DE)**
Erfinder: **Wolf, Karlheinz, Dr.**
**Paul-Klee-Strasse 77**
**D-5090 Leverkusen 1(DE)**

(54) **Farbstoffeinstellungen für die Lederfärbung und Lederhilfsmittel.**

(57) Farbstoffeinstellungen und Hilfsmittel, die

1) aliphatische Polyamine oder Polyimine mit mindestens einer primären und einer sekundären Aminogruppe im Molekül, wobei mindestens eine sekundäre Aminogruppe in protonierter Form vorliegt, und gegebenenfalls

2) wasserlösliche Sulfonsäuregruppen enthaltende Farbstoffe in Form der Alkali- oder Ammoniumsalze

enthalten, werden beim bzw. zum Färben von Leder verwendet.

EP 0 316 730 A2

## Farbstoffeinstellung für die Lederfärbung und Lederhilfsmittel

Gegenstand der Erfindung sind Farbstoffeinstellungen, die

1) aliphatische Polyamine oder Polyimine mit mindestens einer primären und einer sekundären Aminogruppe im Molekül, wobei mindestens eine Aminogruppe in protonierter Form vorliegt, und

2) wasserlösliche Sulfonsäuregruppen enthaltende Farbstoffe in Form der Alkali- oder Ammoniumsalze

enthalten und ihre Verwendung zum Färben von Leder.

Beim Auflösen der Einstellungen in Wasser stellen sich bevorzugt pH-Werte von 7 - 10, insbesondere 8,5 - 9,5, ein.

Gegenstand der Erfindung sind auch Hilfsmittel für die Lederfärbung, die die Komponente 1) enthalten, und ihre Verwendung zur Behandlung von Leder vor, während oder nach dem Färben.

Beim Auflösen der Salze in Wasser stellen sich bevorzugt pH-Werte von 4-10, insbesondere 5-9,5 ein.

Als Amine, die den Salzen 1) zugrunde liegen, kommen vorzugsweise Amine der allgemeinen Formel

$H_2N-(CH_2-CH_2-NH)_n-CH_2-CH_2-NH_2$ (I)

mit $n = 1 - 7$

in Frage.

Sie können beispielsweise durch Reaktion von Dichlorethan mit Ammoniak, z. B. im Molverhältnis 1 : 4 - 40, hergestellt werden (Houben-Weyl, 4. Auflage, XI/1, S. 43/44). Das Reaktionsgemisch kann als solches verwendet werden. Es können aber auch einzelne, daraus erhaltene Amine wie Tetraethylenpentamin, Pentaethylenhexamin, Hexaethylenheptamin oder Teilfraktionen wie Tetraethylenpentamin und höhere oder Pentaethylenhexamin und höhere homologe Amine verwendet werden.

Die Verbindungen 1) können auch durch Polymerisation von Ethylenimin hergestellt werden, z.B. nach dem Verfahren der US-A-2 182 306.

Für die Überführung der Amine in die protonierte Form sind anorganische oder organische Verbindungen geeignet, die gegenüber den Aminen als Säuren fungieren (Brönsted-Säuren).

Geeignete Brönsted-Säuren sind z. B. Salzsäure, Schwefelsäure, Phosphorsäure, Kohlensäure, Borsäure, Hexafluorokieselsäure. Ebenso geeignet sind Mono-, Di- und Tricarbonsäuren wie Ameisen-, Essig-, chlorierte Essig-, Propion- und Milchsäure, Oxal-, Bernstein-, Wein-, Citronen- und Äpfelsäure und bei den mehrbasigen Säuren auch die entsprechenden sauren Salze, einzeln oder in Form ihrer Gemische. Besonders bevorzugte Brönsted-Säuren sind Na $HCO_3$, HCl, $H_2SO_4$, Glutar- und Adipinsäure.

Besonders bevorzugte Farbstoff- bzw. Hilfsmitteleinstellungen enthalten Salze aus Natriumhydrogencarbonat, Glutarsäure oder Adipinsäure und den Umsetzungsprodukten von 1,2-Dichlorethan mit Ammoniak, die wie vorstehend beschrieben hergestellt werden und gegebenenfalls Alkalisalze der Farbstoffe.

Die Farbstofeinstellungen enthalten insbesondere 1 -40 Gew.-% der Komponente 1) und 15 - 99 Gew.-% der Komponente 2) bezogen auf Feststoff.

Die erfindungsgemäßen Einstellungen können auch weitere, übliche Hilfsmittel wie Stellmittel, Staubbindemittel und Eintrocknungsverhinderer enthalten.

Übliche Stellmittel für Farbstoffeinstellungen sind z.B. anorganische Salze wie Natriumchlorid, Natriumsulfat, Soda und Polyphosphate, Puffergemische wie Borate und Phosphate, neutrale Stellmittel wie Dextrin, Harnstoff, Zucker und Stärken, anionische Tenside wie Ligninsulfonate, Alkylschwefelsäuren, Alkylnaphthalinsulfonsäuren oder Alkylbenzolsulfonsäuren, deren Salze, nichtionogene Tenside wie Ethylenoxidaddukte an langkettigen Alkoholen, Amine oder Alkylphenol, Alkalien wie $LiOH.H_2O$, KOH oder alkalische Salze, feste Säuren wie Amidosulfonsäuren oder Oxalsäure, Polyvinylalkohole oder Polyvinylpyrrolidon.

Als Staubbindemittel sind z. B. Öl-Emulgator-Mischungen und Phthalsäureester zu nennen.

Als Eintrocknungsverhinderer sind z. B. Glykole wie Ethylenglykol, Diethylenglykol und Propandiol-1,2 zu nennen.

Sonstige Hilfsmittel können z. B. Konservierungsmittel, Stärken, hydrotrope Substanzen oder Lösungsmittel darstellen.

Bevorzugt liegen die Farbstoffeinstellungen in fester Form vor, während wäßrige Hilfsmitteleinstellungen bevorzugt werden.

Die erfindungsgemäßen Produkte können durch Lösen der feuchten oder trockenen Produkte in Wasser oder durch Mahlen und Mischen der Einzelkomponenten erhalten werden, durch gemeinsame Sprühtrocknung der Lösungen oder Suspensionen der Farbstoffsalze mit den Aminsalzen oder den Aminen mit den entsprechenden Brönsted-Säuren und den weiteren Hilfsmitteln. Auch Sprühgranulierung, Aufbaugranulierung oder Schmelzgranulierung sind möglich.

Für die erfindungsgemäßen Farbstoffpräparationen kommen die bekannten sulfogruppenhaltigen Lederfarbstoffe wie Metallkomplex-, Direkt- oder Säurefarbstoffe in Form ihrer Ammonium- oder Alkalisalze in Frage. Vertreter dieser Farbstoffe werden beispielsweise von G. Otto in "Das Färben des Leders" (1962) S. 51-90 und 107-143 beschrieben.

Ziel der Erfindung ist es, Farbstoffpräparationen und Hilfsmittel zu entwickeln, die ein verbessertes Färbevermögen auf Leder, wie Farbtiefe und Egalität, gute Allgemeinechtheiten, insbesondere gute Schweißechtheit und verbesserte Baderschöpfung erbringen.

In der Patentschrift DD-A-238 709 werden Gemische aus oxethylierten $C_{16}$- bis $C_{18}$-Alkylaminen, oxethyliertem Nonylphenol und Salze des Triethanolamins als Hilfsmittel zum Färben von Leder beschrieben. Aus der DE-A-35 17 804 ist die Verwendung von freiem, gegebenenfalls alkoxylierten Amin beim Lederfärben bekannt. Versucht man, diese Verbindungen in Farbstoffpräparationen einzuarbeiten, so erhält man nur schwierig handhabbare Präparationen.

Es treten starke Verklumpungen, Verklebungen und teilweise Zersetzungen (Abspaltungen von Ammoniak) ein. Werden die Amine dagegen erfindungsgemäß mit Brönsted-Säuren umgesetzt, erhält man lagerstabile Farbstoff- Hilfsmittel-Gemische.

Mit Hilfe der erfindungsgemäßen Farbstoff- und Hilfsmitteleinstellungen erhält man starke und egale Färbungen, die Färbebäder werden hervorragend ausgezehrt und die Schweißechtheit der Färbungen wird verbessert.

## Beispiele

### Beispiel 1

36 g des Na-Salzes des schwarzen Farbstoffs, der erhalten wird durch Diazotierung von 4,4′-Diaminostilben-2,2′-disulfonsäure/p-Nitroanilin und Kupplung mit 8-Amino-3,6-disulfonaphthol-1, Resorcin, 1,3-Diaminobenzol und Weiterreaktion mit diazotiertem 4-Nitroanilin, werden mit
20 g des Hilfsmittels A und
42 g Siedesalz gemahlen und gemischt und mit
2 g eines Öl-Emulgatorgemisches entstaubt.

Man erhält 100 g einer Farbstoffpräparation, die nach der Färbung auf nachgegerbtem Chromleder und rein vegetabil gegerbtem Leder ausgezeichnete Farbstärke und Egalität bei guten Allgemeinechtheiten und verbesserter Baderschöpfung aufweist im Gegensatz zur Färbung mit der gleichen Farbstoffmenge ohne Hilfsmittel.

### Beispiel 2

36 g des Farbstoffs des Beispiels 1 werden zusammen mit
7 g des Hilfsmittels B
2 g eines Öl-Emulgator-Gemisches
50 g Siedesalz und
200 g Wasser am Schnellrührer angeschlagen mit Salzsäure auf pH 8,5 gestellt und sprühgetrocknet (Zerstäubungsorgan: 2-Stoff-Düse) mit einer Eingangstemperatur von 180 °C und einer Ausgangstemperatur von 80 °C. Man erhält eine Farbstoffpräparation mit vergleichbar guten Ergebnissen wie im Beispiel 1.

### Beispiel 3

27 g des braunen Farbstoffs der Formel

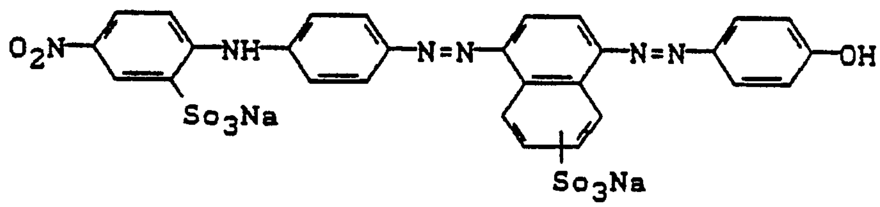

werden zusammen mit
8 g Hilfsmittel C
2 g eines Öl-Emulgator-Gemisches
58 g Natriumsulfat und
250 g Wasser am Schnellrührer angeschlagen, mit Schwefelsäure auf pH 9 gestellt und abgesprüht (Eingangstemp.: 180° C, Ausgangstemp.: 80° C, Zerstäubingsorgan: 2-Stoff-Düse).

Man erhält ein Farbstoffpulver mit entsprechenden Effekten wie im Beispiel 1 beschrieben.

Beispiel 4

Wenn man im Beispiel 3 statt Hilfsmittel C jetzt Hilfsmittel D einsetzt, erhält man vergleichbar gute Ergebnisse.

Beispiel 5

40 g C. J. Acid Orange 7 (= C. J. Nr. 15 510) werden zusammen mit
18 g des Hilfsmittels A und
40 g Siedesalz gemahlen und gemischt und mit
2 g eines Öl-Emulgator-Gemisches entstaubt.

Man erhält eine Pulvereinstellung mit vergleichbar guten Ergebnissen wie im Beispiel 1 beschrieben.

Beispiel 6

30 g des Na-Salzes des braunen Farbstoffs, der erhalten wird durch Diazotierung von 8-Amino-3,6-disulfonaphthol-1,4-(4-Nitro-2-sulfophenylamino)-anilin und p-Nitranilin und Kupplung mit Resorcin und Tolamin, werden mit
14 g Hilfsmittel B
2 g eines Öl-Emulgator-Gemisches
49 g Siedesalz und
200g Wasser am Schnellrührer angeschlagen, mit Salzsäure auf pH 9,5 gestellt und sprühgetrocknet (Zerstäubungsorgan: Ein-Stoff-Düse) mit einer Eingangstemperatur von 190° C und einer Ausgangstemperatur von 85° C.

Man erhält eine Farbstoffpräparation mit vergleichbar guten Ergebnissen wie im Beispiel 1 beschrieben.

Hilfsmittel A:

Umsetzungsprodukt aus 1 Mol Tetraethylenpentamin, gelöst in Wasser, und 4-5 Mol Natriumhydrogencarbonat mit anschließender Sprühtrocknung dieses entstandenen Reaktionsgemisches mit einer Einstoffdüse.

Hilfsmittel B:

Tetraethylenpentamin

Hilfsmittel C:

Gemisch, das durch Umsetzung von 1,2-Dichlorethan mit Ammoniak nach Houben-Weyl, 4. Auflage, XI/1 S. 44, und anschließendes Abdestillieren der niedrigsiedenden Anteile bei 156-160 °C und 15 Torr erhalten wird, und
40 % Tetraethylenpentamin,
30 % Pentaethylenhexamin und
30 % höher kondensierte Amine
enthält.

Hilfsmittel D:

Triethylentetramin

Hilfsmittel E:

1 Mol Tetraethylenpentamin weden in 559 g Wasser bei Raumtemperatur vorgelegt und 1,5 Mol Adipinsäure unter Rühren zugesetzt. Die Reaktion ist schwach exotherm, man erhält eine klare Lösung. Danach werden 0,9 Mol Ameisensäure zugesetzt.

Das Produkt hat eine Säuerzahl von 210 (Theorie 217), der pH-Wert beträgt etwa 5,9.

Beispiel 7

Wet blue Leder wird (in 200 Gew.-% Wasser) mit einer Mischung aus 3 Gew.-% eines Kondensationsproduktes aus einer Naphthalinsulfonsäure mit Formaldehyd und 3 Gew.-% eines vegetabilen Gerbstoffs nachgegerbt. Es werden 3 Gew.-% des Farbstoffs (J. Acid. Brown 83 (= C.J. Nr. 20250) in 250 Gew.-% Wasser zur Färbung eingesetzt. Nach 20 Minuten Färbezeit bei 40 °C wird mit 2 % Ameisensäure abgesäuert.

In frischer Flotte (250 Gew.-% Wasser) wird mit Ameisensäure ein Flotten-pH-Wert von ca. 3,8 eingestellt. In dieser Flotte wird das Leder mit insgesamt 2 % des Hilfsmittels E (zugesetzt in zwei Raten a 1 % sofort bzw. nach 10 Minuten) 30 Minuten lang behandelt. Danach wird das Leder gefettet und fertiggestellt. Die Gew.-%-Angaben beziehe sich auf das Falzgewicht. Das Leder zeigt eine gute Schweißechtheit.

Beispiel 8

Gute Ergebnisse erhält man auch, wenn man anstelle von C.J. Acid Brown 83 den Farbstoff C.J. Acid Red 97 (= C.J. Nr. 22890) einsetzt.

## Ansprüche

1. Farbstoffeinstellungen, die
1) aliphatische Polyamine oder Polyimine mit mindestens einer primären und einer sekundären Aminogruppe im Molekül, wobei mindestens eine sekundäre Aminogruppe in protonierter Form vorliegt, und
2) wasserlösliche Sulfonsäuregruppen enthaltende Farbstoffe in Form der Alkali- oder Ammoniumsalze enthalten.

2. Einstellungen nach Anspruch 1, die als Komponente 1) Salze von Aminen
$H_2N-(CH_2-CH_2-NH)_n-CH_2-CH_2-NH_2$
worin n für 1-7 steht, und Brönsted-Säuren enthalten.

3. Einstellungen nach Anspruch 1, die als Komponente 1) ein Reaktionsgemisch aus der Umsetzung von Dichlorethan mit Ammoniak in teilprotonierter Form enthalten.

4. Einstellungen nach Anspruch 1, deren Komponente 1) durch Protonierung mit den Brönsted-Säuren Natriumbicarbonat, Salzsäure, Schwefelsäure, Glutarsäure oder Adipinsäure erhalten wurde.

5. Einstellungen nach Anspruch 1 mit einem Anteil der Komponente 1) von 1 - 40 Gew.-% und einem Anteil der Komponente 2) von 15 - 99 Gew.-%, bezogen auf Feststoff, enthalten.

6. Hilfsmittel für die Lederfärbung, die aliphatische Polyamine oder Polyimine mit mindestens einer primären und einer sekundären Aminogruppe im Molekül, wobei mindestens eine Aminogruppe in protonierter Form vorliegt, enthalten.

7. Hilfsmittel nach Anspruch 6, die Salze von Aminen der Formel

$H_2N-(CH_2-CH_2-NH)_n-CH_2-CH_2-NH_2$

worin n für 1-7 steht, und Brönsted-Säuren enthalten.

8. Hilfsmittel nach Anspruch 6, die Salze von $NaHCO_3$, Glutarsäure oder Adipinsäure enthalten.

9. Verfahren zum Färben von Leder, dadurch gekennzeichnet, daß man Farbstoffeinstellungen nach Anspruch 1 verwendet.

10. Verfahren zum Färben von Leder, dadurch gekennzeichnet, daß man Hilfsmittel nach Anspruch 6 verwendet.